Europäisches Patentamt

European Patent Office

Office européen des brevets

(19)

(11) Publication number: **0 365 929**
**A2**

# (12) EUROPEAN PATENT APPLICATION

(21) Application number: **89118951.6**

(22) Date of filing: **12.10.89**

(51) Int. Cl.⁵: **B01J 8/04** , //**C01C1/04,**
**C07C29/15**

(30) Priority: **24.10.88 CH 3934/88**

(43) Date of publication of application:
**02.05.90 Bulletin 90/18**

(84) Designated Contracting States:
**AT DE ES FR GB GR IT NL**

(71) Applicant: **AMMONIA CASALE S.A.**
**Via della Posta 4**
**CH-6900 Lugano(CH)**

Applicant: **Zardi, Umberto**
**Via Lucino 57**
**CH-6932 Breganzona (Ti)(CH)**

(72) Inventor: **Zardi, Umberto**
**Via Lucino 57**
**CH-6932 Breganzona(CH)**
Inventor: **Pagani, Giorgio**
**Salita dei Frati 13**
**CH-6900 Lugano(CH)**

(74) Representative: **Incollingo, Italo**
**AMMONIA CASALE S.A. Via della Posta 4**
**CH-6900 Lugano(CH)**

(54) **System for the optimal gas distribution in reactors and walls thereof.**

(57) To achieve the optimal distribution of gas throughout the catalytic beds of reactors for heterogeneous synthesis, eliminate flow gradients and provide mechanical support with minimal dimensions of the catalyst in said beds, a multi-layer wall is formed consisting of a thin part such as to obtain the necessary pressure drop of the gas and to act almost exclusively as gas distributor, without appreciably contributing to the support of the catalyst; a part substantially without pressure drop but only as a container for the catalyst; and a very thick intermediate part so as to act substantially as the only mechanical support and to form an airspace intended to avoid the direct impact on the catalyst of the hight-speed gas and to eliminate flow gradients of said gas throughout the bed.

FIG. 1

FIG. 1B

Xerox Copy Centre

FIG. 1A

FIG. 1C

## System for the optimal distribution of gas in catalytic beds, the elimination of flow gradients, and the support with minimum bulk of the catalyst in reactors for heterogeneous synthesis and walls for reactor cartridges so obtained.

This invention is related to a system for the optimal distribution of gas in catalyst beds, the elimination of flow gradients, and the support with minimum bulk of the catalyst in reactors for heterogeneous synthesis and walls for reactor cartridges so obtained.

It is well known how important it is to achieve the even distribution of gas throughout the catalyst in fixed-bed reactors for heterogeneous synthesis, such as for example the synthesis of ammonia, of methanol or other substances.

The walls distributing the gas and containing the catalyst in the catalytic beds must furthermore provide, besides the proper distribution of the gas itself (even distribution for the entire length of the bed; minimum impact of the gas with the catalyst to avoid channeling and damaging the catalyst), the necessary mechanical support for the catalytic beds.

It is well known, if effect, that the above-mentioned walls undergo considerable stress, both of a thermal and of a mechanical nature, owing to the settling of the catalyst and to thermal expansion as a result of the high temperatures used.

As a result, the function of mechanical support, besides ensuring the even distribution of gas, is also of critical importance for the correct operation of the system.

The optimal mechanical size of the various parts constituting the wall supporting the catalytic beds which must at the same time ensure the optimal distribution of gas is therefore one the critical aspects of the system.

Another critical aspect is represented by the possibility of producing said walls in the smallest possible size or radial thickness in order to ensure a maximum volume available for the catalytic beds (maximum volume of the catalytic beds) with a minimum volume of expensive containers, or impact parts of the reactor, operating at high pressure.

For this purpose said walls usually consist of several parts having different functions.

As already described by the Applicants in European Patent No. 0265654 the walls containing the catalyst may consist of:

a) a part permeable by gas (for example a perforated wall) for the purpose of effecting the pressure drop necessary to ensure the even distribution of gas throughout the bed;

b) a part supporting the catalyst (for example net);

c) an intermediate part situated between part a) and part b), for the purpose of creating an airspace to achieve a better distribution of the gas, such part consisting for example of a wall with "bridge" perforations.

The above-mentioned airspace must fulfil the following functions:

- avoid the direct impact with the catalyst of the high speed gas coming from a), producing a pressure drop. To this end the radial flow of the gas leaving from the perforations in part a) must be deviated into an axial flow;

- equalize the flow of gas feeding the catalytic bed all along the bed itself.

Very complex solutions have been put forward for example in English Patents No. 1118750 and No. 1352550, in which the problems of gas distribution, of a reliable mechanical support for the catalyst in the catalytic beds, and of maximum use of the available volume of the containers in the catalyst-containing cartridges (minimum thickness or dimension of the walls) are not all solved at the same time in an optimal manner.

In effect the known gas distribution walls described in the State of the Art generally combine in the same element the two functions (gas distribution and mechanical support) which very often have differing constructional requirements.

When for example mechanical support is provided by using a thick wall which at the same time is used to distribute the gas by means of suitable perforations to ensure the necessary pressure drop, we are confronted with a non-optimal solution for the following reasons:

1 - perforation of thick walls is very expensive;

2 - a system is necessary in any case to create an airspace between the thick perforated wall and the catalyst support (net, for example);

3 - the overall dimensions (radial thickness) of the above-mentioned elements is considerable, taking away from the catalyst valuable space. It is essential, as already mentioned, to create the above walls capable of fulfilling all the required functions but with the smallest possible radial thickness.

The Applicants have surprisingly found that the above problems can be solved with a system characterized by the fact that: 1) part a) is so thin as to be almost exclusively intended to produce the necessary pressure drop without contributing, unless to a small extent, if at all, to the mechanical support of the catalyst; 2) part b) is given openings smaller than the catalyst's minimum size, thus acting almost exclusively as catalyst container, without contributing to the mechanical support of the catalytic bed and with a low pressure drop; and 3) part c) is thicker than the other parts, so as to fulfil the double role of mechanical support for the catalytic bed and of forming the necessary airspace between a) and b) to achieve the optimal distribution of gas without a direct impact with the catalyst by the high speed gas and with the gas flow equalized for the total length of the bed.

In a preferred embodiment of the invention part a) has a thickness (s) lower than 8 mm, preferably between 3 and 2 mm, and c) has a thickness (S) greater than 3 mm, preferably between 5 and 20 mm, thus creating an airspace with thickness (S') of less than 45 mm, preferably between 8 and 16 mm; preferably part c) consists of a wall with "bridge" perforations forming the airspace with thickness (S') said airspace being divided into two zones: zone (A) situated in front of gas (G) inlet perforation (f) for the purpose of deviating the high-speed gas (G) flowing radially into a substantially axial direction (GA) avoiding a direct impact with the catalyst, perforations (f) being situated in front of the depression in the bridge wall; said gas (GA) feeds therefore zone (B) of airspace (S') or gas equalization chamber thus permitting the even distribution of the gas throughout the length of the catalytic bed.

According to a particular aspect of the invention the walls of the catalytic beds with an L:D ratio of less than 3 consist substantially of elements b) and c).

The invention includes the catalyst-containing cartridges whose walls are obtained according to the system in question.

The purpose of the invention will become more apparent from the following description of the preferred but not limitative embodiment shown in the attached drawings.

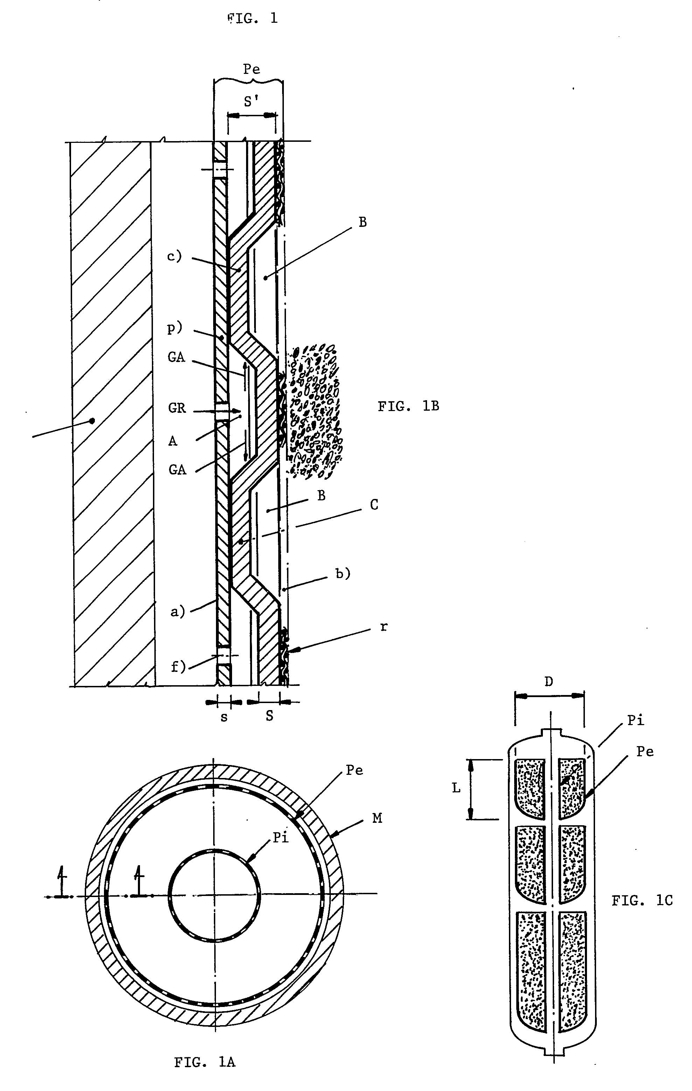

Figure 1A is the cross-section view of a reactor shown on a very small scale in Fig. 1, with shell (M) containing catalyst baskets CCi (Fig. 1C), consisting of an external gas distribution wall (Pe) and an internal wall (Pi).

As mentioned above Figure 1 is the view of a longitudinal cross-section of a portion of wall Pe of a reactor (as shown on a small scale in Fig. 1C) consisting of shell (M) and of the catalyst-containing external wall (Pe), external wall (Pe) being formed by: 1) element a) for the distribution of gas consiting of a thin wall permeable to gas with the exclusive function of effecting the necessary pressure drop and with the limited function of mechanical support, the wall having a small thickness (s) and being provided with perforations (f); 2) element b) with the exclusive function of containing the catalyst consisting for example of net (r) permeable to gas with a mesh size smaller than the catalyst's minimum size and having no function as support of the catalytic bed; 3) element c) consisting of a thick wall (S) combining the function of mechanical support for the catalytic bed and of forming the necessary airspace with thickness (S') between elements a) and b) to ensure the correct distribution of gas (elimination of direct impact with the catalyst and equalized flow throughout the bed).

Figure 1C shows a schematic view of a cartridge (CU) with 3 catalytic beds (CC1, CC2, CC3) where L is the length of a bed and D its diameter.

In a preferred but not limitative embodiment, and more particularly according to the example described above and shown in Fig. 1, the thickness (s) of part a) is 3 mm, the thickness (S) of part b), consisting of a wall with "bridge" perforations, is 6 mm and the airspace between a) and b) (S') is 11 mm, said airspace being divided into two zones: zone (A) situated in front of the gas (G) inlet perforation (f) which deviates the high-speed gas (G) flowing in a radial direction, giving it a substantially axial direction (GA) avoiding the direct impact with the catalyst, since the perforations (f) are situated in front of the depression in the bridge wall; said gas (GA) then feeds zone (B) of airspace (S') or gas equalization chamber throughout the length of the catalytic bed.

## Claims

1. System for obtaining minimum dimensions walls for the optimal distribution of gas and the support of the catalyst in catalytic beds for radial or axial-radial reactors for heterogeneous synthesis, said walls comprising: a) a part permeable by gas; b) a support for the catalyst; c) an intermediate part situated between part a) and part b), characterized by the fact that: 1) part a) is so thin as to being almost exclusively used to produce the necessary pressure drop and contributes only minimally, or even not at all, to the mechanical support of the catalyst; 2) part b) has openings smaller than the minimum size of catalyst, so as to act almost exclusively as catalyst container, without contributing to the mechanical support of the catalytic bed and having a low pressure drop; and 3) part c) is thicker than the other parts so as to act both as mechanical support for the catalytic bed and to form the necessary airspace between part a) and part b) to achieve said optimal distribution of the gas, without the high-speed gas gas having any direct contact with the catalyst and with an even gas flow along the entire length of the bed.

2. System according to claim 1, characterized by the fact that: part a) has a thickness (s) of less than 8 mm and preferably between 3 and 2 mm;

and part c) has a thickness (S) greater than 3 mm, preferably between 5 and 20 mm, creating an airspace with a thickness (S´) of less than 45 mm, preferably between 8 and 16 mm.

3. System according to claim 1, characterized by the fact that part c) consists of a wall with "bridge" perforations forming an airspace with thickness (S´), said airspace being divided into two zones: zone (A) situated in front of perforation (f) which is the inlet for gas (G) which is intended to deviate the high-speed gas (G) flowing radially imparting to said gas a substantially axial flow (GA) avoiding the direct impact with the catalyst since the perforations (f) are situated in front of the depression in the bridge wall; said gas (GA) then feeds zone (B) of airspace (S´) or gas equalizing chamber thus permitting the even distribution of gas along the axis of the catalytic bed.

4. System according to claim 1 in which the ratio L/D of at least one catalytic bed in the cartridge containing the catalyst is lower than 3, characterized by the fact that the walls of the catalytic beds with a ratio L/D lower than 3 consist substantially of parts b) and c).

5. Walls for catalyst containing cartridges comprising one or more catalytic beds in radial or axial-radial reactors for heterogeneous synthesis, produced substantially with the aid of the system according to the preceding claims and as described in this invention.

FIG. 1

FIG. 1B

FIG. 1A

FIG. 1C